Europäisches Patentamt

European Patent Office

Office européen des brevets

(19)

(11) Veröffentlichungsnummer: **0 052 245**
**B1**

(12)

# EUROPÄISCHE PATENTSCHRIFT

(45) Veröffentlichungstag der Patentschrift:
07.03.84

(51) Int. Cl.³: **C 02 F 1/52, C 02 F 9/00**

(21) Anmeldenummer: 81108531.5

(22) Anmeldetag: 20.10.81

(54) **Verfahren zur Reinigung von neutralisierten Industrieabwässern und Vorrichtung zur Durchführung des Verfahrens.**

(30) Priorität: 15.11.80 DE 3043254

(43) Veröffentlichungstag der Anmeldung:
26.05.82 Patentblatt 82/21

(45) Bekanntmachung des Hinweises auf die Patenterteilung:
07.03.84 Patentblatt 84/10

(84) Benannte Vertragsstaaten:
AT BE CH DE FR GB IT LI NL SE

(56) Entgegenhaltungen:
AT - B - 321 218
AT - B - 327 831

(73) Patentinhaber: ROBERT BOSCH GMBH, Postfach 50,
D-7000 Stuttgart 1 (DE)

(72) Erfinder: Salzer, Richard, Florian-Geyer-Strasse 30,
D-7000 Stuttgart 31 (DE)
Erfinder: Schwering, Hans-Ulrich, Dr., Trochtelfinger
Weg 11, D-7250 Leonberg (DE)

Verfahren zur Reinigung von neutralisierten Industrieabwässern und Vorrichtung zur Durchführung des Verfahrens

### Stand der Technik

Gewerbliche Abwasser ergeben sich durch die Verwendung von Wasser als Kühlmittel und durch den Wasserverbrauch bei zahlreichen nassen Arbeitsvorgängen, z.B. beim Waschen, Spülen, Einweichen, Destillieren, Filtrieren, als Lösungsmittel bei chemischen Umsetzungen sowie als Spülwasser bei der Reinigung der dazu benutzten Apparate. Je nach enthaltenen Fremdstoffen anorganischen oder organischer Herkunft, die als ungelöste feste oder flüssige Bestandteile oder in gelöster, teilweise kolloidaler Form vorliegen, erfolgt die Behandlung auf biologischem Wege (durch Mikroorganismen) oder durch chemische und physikalische Verfahren. Zu der chemischen Abwasserreinigung gehören im engeren Sinne Neutralisations- und Flokkungsverfahren. Saure Abwasser werden im allgemeinen mit Kalk, alkalische mit Salz- oder Schwefelsäure neutralisiert. Dabei ausfallende Feststoffe (z.B. feinverteilte Schlammflocken) lassen sich in einer nachgeschalteten mechanischen Klärung entfernen. Dabei werden Flokkungsverfahren zur Abscheidung nicht absetzbarer Schwebestoffe und kolloidal gelöster Substanzen eingesetzt.

Die als Endprodukt bei dieser Wasserreinigung anfallenden Feststoffe (Schlammflocken) werden in einer Sedimentationseinrichtung aus dem Wasser entfernt. Hierfür sind zwei Arten von Schwerkraftabscheidern bekannt:

a) Absetzbecken für Abwasseranlagen sind von Abwasser durchströmte Becken, in denen die Fliessgeschwindigkeit des Wassers derart verringert wird, dass sich abscheidbare Stoffe als Bodenschlamm absetzen können oder spezifisch leichtere Stoffe an die Oberfläche aufschwemmen. Absetzbecken haben meist rechteckige Form, wobei grössere Anlagen selbsttätige Räumvorrichtungen (z.B. Schildräumer, Kettenräumer oder Pendelschildräumer) aufweisen, die in hin- und hergehender Bewegung am Beckenrand den abgesetzten Schlamm in einen Pumpensumpf schieben, von wo aus er durch Pumpen abgesaugt und weitergeführt wird.

Konventionelle Absetzbecken haben den Nachteil eines sehr grossen Platzbedarfes. Von den Wasserbehörden werden hier im allgemeinen Verweilzeiten des 4- bis 6fachen Durchsatzes verlangt (z.B. 10 m³/h Durchsatz, Beckeninhalt 40-60 m³). Der Vorteil dieser Becken liegt darin, dass sie auf Änderung des Schlammgehaltes und der durchgesetzten Wassermenge unempfindlich reagieren.

b) Schrägklärer (auch Platten-, Lamellenabscheider genannt) bestehen aus vielen übereinander gestapelten und schräg gestellten Absetzbecken. Hierdurch wird die Abscheidefläche bei gegebenen Volumen vervielfacht. Durch die Schrägstellung rutscht der abgeschiedene Schlamm in einen Auffangbereich des Schrägklärers. Diese Anordnung erlaubt eine wesentliche Verkürzung der Verweilzeit (einige Minuten) und dadurch ein geringes Volumen der Einheit.

Nachteilig bei diesen Schrägklärern sind die grosse Bauhöhe bedingt durch die schräg stehenden Platten und den darunter liegenden Schlammsammelraum. Weiterhin sind diese Apparate gegen hohe Schlammengen, insbesondere wenn sie stossweise auftreten, empfindlich. Durch die kurze Verweilzeit tritt ausserdem keine ausreichende Eindickung des Schlamms ein, so dass dieser besonderen Eindickern zugeführt werden muss. In der Praxis geht deshalb der Platzbedarfsvorteil besonders bei kleineren Einheiten (≈ 10 m³/h) wieder verloren.

### Vorteile der Erfindung

Das erfindungsgemässe Verfahren sowie die Vorrichtung zur Durchführung des Verfahrens mit den kennzeichnenden Merkmalen des Hauptanspruchs bzw. des Nebenanspruchs haben demgegenüber den Vorteil, dass durch Hintereinander-Schaltung mehrerer Reinigungsstufen mit spezieller Anpassung an die Gegebenheiten jede Stufe optimal ausgenützt werden kann und der Reinigungsprozess bei einem Minimum an Platzbedarf optimal durchgeführt werden kann. Durch die Kombination von Vorklärung im Absetzbecken und Nachklärung im Schrägklärer wird ein Trübedurchbruch bei hohem Schlammanfall, insbesondere bei Schlammstössen verhindert. Durch die Vorklärung können die Plattenabstände des Schrägklärers enger gewählt werden, wodurch die Feinabscheidung verbessert wird.

Durch optimale Anpassung der Vorklärstufe im Absetzbecken und anschliessender Klärung im Schrägklärer kann die mittlere Verweilzeit und damit die Baugrösse der Anlage entscheidend reduziert werden, ohne die Schlammeindickung zu beeinflussen.

Durch die in den Unteransprüchen aufgeführten Massnahmen ist eine vorteilhafte Weiterbildung und Verbesserung des im Hauptanspruch angegebenen Verfahrens möglich. Besonders vorteilhaft ist auch die Kombination des Schrägklärers mit einer pendelnden Absaugvorrichtung unterhalb des Plattenpakets, wodurch sich ein Schlammtrichter erübrigt. Dadurch kann die Bauhöhe der Einheit entscheidend verringert werden, ohne auf einen grösseren Schlammsammelraum verzichten zu müssen. Weiterhin ermöglicht die individuelle Absaugung der Absetzzonen eine optimale Schlammeindickung.

Besonders vorteilhaft ist auch die im Absetzbecken vorgesehene Prallplatte, die der Erzeugung einer Walzenbildung des dem Absetzbecken zugeführten Abwassers dient. Hierdurch kann eine Rührvorrichtung, welche die Flockenbildung unterstützt, eingespart werden.

Besonders vorteilhaft ist weiterhin die Aufteilung des Wassers in mehrere Teilströme nach der Vorklärung des Abwassers im Absetzbecken, wodurch eine gleichmässige Lastverteilung auf die Abscheideplatten des Schrägklärers erreicht wird. Die Aufteilung der Teilströme geschieht durch seitlich angeordnete Rinnen, die das Abwasser an bestimmten Stellen den Abscheideplatten zuführen. Durch diese Massnahme wird vermieden, dass in überlasteten Plattenbereichen Schlamm durchbricht, während andere Bereiche weniger beaufschlagt werden. Weiter ergibt sich hierdurch eine grössere Freiheit in der Dimensionierung der Einzelmasse des Abscheidebeckens.

Bei schlecht sedimentierten Schlämmen ist es nach der Erfindung möglich, den Plattenteil des Schrägklärers derart zu erweitern, dass eine dritte Zone mit noch engeren Plattenabständen nachgeschaltet wird. Aufgrund der Vorabscheidung im Absetzbecken sowie im ersten Schrägklärer ist trotz der weiterhin verringerten Plattenabstände kein Schlammdurchbruch zu befürchten.

Zeichnung

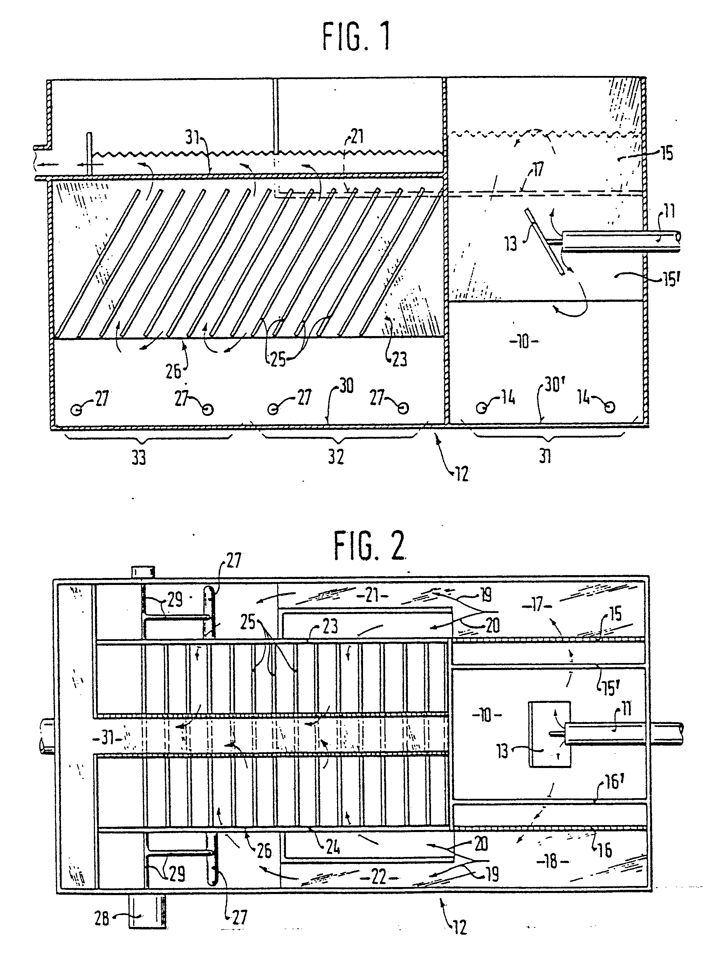

Ein Ausführungsbeispiel der Erfindung ist in der Zeichnung dargestellt und in der nachfolgenden Beschreibung näher erläutert. Es zeigen Fig. 1 eine Seitenansicht, Fig. 2 eine Draufsicht auf die erfindungsgemässe Einrichtung zur Reinigung von neutralisierten Industrieabwässern.

Beschreibung der Erfindung

Das neutralisierte Industrieabwasser gemäss der Erfindung wird zunächst einer ersten Behandlungsstufe in einem Absetzbecken 10 über eine Zuleitung 11 zugeführt. Das Absetzbecken 10 befindet sich in einem Längsabsetzbecken 12 (Klärbecken), welches in seiner Länge etwa bei einem Viertel bis einem Drittel unterteilt ist, zur Bildung der verschiedenen Behandlungsstufen des Abwassers. In der ersten Stufe wird das zu klärende Wasser so gegen eine Prallplatte 13 geführt, dass es zu einer Walzenbildung kommt. Dies entspricht einem Rühreffekt zur Unterstützung der Flockenbildung, wobei eine Kontaktierung eine Vergrösserung der Schlammflocken bewirkt. Die Schlammflocken sinken auf den Boden des Absetzbeckens 10 ab und werden von einer schematisch dargestellten Absaugvorrichtung 14 abgesaugt. Besonders vorteilhaft ist die Verwendung einer Absaugvorrichtung, die am Boden des Absetzbeckens 10 eine pendelnde Bewegung ausführt und den Schlamm somit entfernt (siehe z.B. DE-C 22 61 837). Es können jedoch auch andere stationäre Absaugvorrichtungen verwendet werden. Durch die Verwendung einer pendelnden Absaugvorrichtung ist eine sehr kompakte Bauweise möglich.

Im Absetzbecken 10 sind seitlich Überlaufwände 15, 16 vorgesehen, über die das vorgeklärte Abwasser in Rinnen 17, 18 überströmt. Vor den Überlaufwänden 15, 16 sind noch Tauchwände 15', 16' angeordnet, unter die das Abwasser durchströmt, bevor es die Überlaufwände überströmt. Diese Tauchwände dienen auch der Beruhigung des Wasserspiegels im Bereich der Überlaufwände 15, 16. Dieses Abwasser wird vo der Rinne 17, 18 links und rechts des Längsabsetzbeckens 12 in Teilströme 19, 20 zerlegt und über Rinnen 21, 22 und senkrecht nach unten mittels Tauchwände 23, 24 von unten her einem Plattenpaket 25 eines Schrägklärers 26 gleichmässig zugeführt. Diese zweite Stufe der Abwasserkläranlage befindet sich ebenfalls im Längsabsetzbecken 12. Durch die Vergrösserung der Absetzfläche durch das Plattenpaket 25 bei gleichzeitiger Verringerung der Sinktiefe werden hier die noch in Schwebe befindlichen feineren Schlammflocken abgeschieden. Das vollständig geklärte Wasser wird über eine mittig über den Platten befindliche Sammelrinne 31, die als aufgesetzte Wanne oberhalb der Platten angeordnet ist, nach aussen hin abgeführt.

Der abgeschiedene Schlamm, der sich auf dem Beckenboden 30 des Absetzbeckens und des Schrägklärers ansammelt und sich dabei eindickt, wird über mehrere Absaugrohre 14, 27 abgezogen. Diese Absaugrohre 14, 27 liegen quer zur Längsachse des Längsabsetzbeckens 12 und werden von einer mechanischen Vorrichtung 28 über ein Gestänge 29 pendelnd über den Beckenboden 30, 30' bewegt. Hierbei ist es von Bedeutung, dass den jeweiligen Absetzzonen 31 bis 33 eine eigene Absaugvorrichtung zugeordnet ist. Dadurch kann die Menge des abgezogenen Schlammwassers dem jeweiligen Anfall angepasst werden.

Das Volumen des gesamten Klärbeckens wird so ausgelegt, dass eine Verweilzeit von einer halben bis einer Stunde erreicht wird. Dies garantiert eine ausreichende Eindickung des Schlammes, was den Vorteil erbringt, dass besondere Eindicker entbehrlich sind.

Ein bevorzugtes Ausführungsbeispiel einer erfindungsgemässen Anlage hat zum Beispiel folgende Abmasse: Bei einem Gesamtnutzvolumen von 2 m³ des Längsabsetzbeckens 12 entfallen auf das Absetzbecken 10 (Vorabscheidezone) 0,7 m³ und auf den Schrägklärer 26 mit Plattenpaket 25 1,3 m³. Als nutzbare Klärfläche ergibt sich somit im Absetzbecken 10 eine Fläche von 0,4 m² und im Schrägklärer mit 17 Platten (Plattengrösse ungefähr 0,28 m²) eine Fläche von ungefähr 4,7 m². Dies gibt eine gesamte Klärfläche von 5,1 m² bei einem Platzbedarf der Einrichtung von ca. 2 m² Grundfläche. Hieraus ist ersichtlich, dass der Platzbedarf der Gesamtanlage ausserordentlich gering ist. Bei einer Beschickung mit 4 m³/h Galvanikabwasser mit einer Verweilzeit von 0,5 h und einem Schlammanteil von 200 ml pro l sowie Flockungsmittelzugabe im Einlauf ist im Auslauf kein Trübedurchbruch feststellbar. Der Schlamm erweist sich als gut filtrierbar.

Die Anlage stellt demnach eine optimale Kombination von verschiedenen Behandlungsstufen von Abwasser dar.

**Patentansprüche**

1. Verfahren zur Reinigung von neutralisierten

Industrieabwässern, dadurch gekennzeichnet, dass in einer ersten Behandlungsstufe das Abwasser einem sich in einem Längsabsetzbecken (12) befindenden Absetzbecken (10) derart zugeführt wird, dass es zu einer Walzenbildung und damit zu einer Intensivierung einer Schlammflockenbildung kommt, dass das so vorgeklärte Abwasser in einer zweiten Behandlungsstufe einem sich ebenfalls im Längsabsetzbecken (12) befindenden Schrägklärer (26) mit Plattenpaket (25) vorzugsweise gleichmässig verteilt zugeführt wird und dass der sedimentierte Schlamm am Boden des Längsabsetzbeckens (12) entfernt wird.

2. Verfahren nach Anspruch 1, dadurch gekennzeichnet, dass das dem Absetzbecken (10) zugeführte Abwasser über eine Zuleitung (11) gegen eine geneigte Prallplatte (13) geleitet wird.

3. Verfahren nach Anspruch 1 oder 2, dadurch gekennzeichnet, dass der auf dem Boden (30') des Absetzbeckens (10) anfallende Schlamm durch eine Absaugvorrichtung (14) entfernt wird.

4. Verfahren nach Anspruch 1 oder 2, dadurch gekennzeichnet, dass das vorgeklärte Abwasser unter Tauchwände (15', 16') und über Seitenwände (15, 16) in seitlich angeordnete Rinnen (17, 18) strömt und dem nachfolgenden Schrägklärer (26) zugeführt wird.

5. Verfahren nach einem oder mehreren der vorhergehenden Ansprüche, dadurch gekennzeichnet, dass das vorgeklärte Abwasser vom Absetzbecken (10) in Teilströme (19, 20) aufgeteilt und dem Schrägklärer (26) gleichmässig zugeführt wird.

6. Verfahren nach einem oder mehreren der vorhergehenden Ansprüche, dadurch gekennzeichnet, dass das vorgeklärte Abwasser über seitlich am Schrägklärer (26) angeordnete Rinnen (21, 22) und Tauchwände (23, 24) einem Plattenpaket (25) des Schrägklärers (26) von unten her zugeführt wird, dass das Abwasser am Plattenpaket (25) aufwärts steigt und über eine oberhalb der Platten (25) mittig angeordnete Rinne (31) abgeleitet wird.

7. Verfahren nach einem oder mehreren der Ansprüche 4 bis 6, dadurch gekennzeichnet, dass der sich auf dem Beckenboden (30) des Schrägklärers (26) absetzende Schlamm mittels quer zur Längsachse des Beckens angeordnete Absaugrohre (27) abgesaugt wird.

8. Verfahren nach Anspruch 7, dadurch gekennzeichnet, dass die Absaugrohre (27) eine am Beckenboden (30) hin und her pendelnde Bewegung mittels eines Antriebs (28) und einem Gestänge (29) durchführen.

9. Verfahren nach Anspruch 7 oder 8, dadurch gekennzeichnet, dass jeder Absetzzone (32, 33) eine separate Absaugvorrichtung zugeordnet wird.

10. Verfahren nach Anspruch 4, dadurch gekennzeichnet, dass dem Schrägklärer (10) ein weiterer Schrägklärer mit einem Plattenpaket mit vermindertem Plattenabstand nachgeschaltet wird.

11. Anlage zur Durchführung des Verfahrens nach einem oder mehreren der Ansprüche 1 bis 10, dadurch gekennzeichnet, dass das Klärbecken (Längsabsetzbecken) (12) in wenigstens zwei Behandlungszonen (10, 26) aufgeteilt ist, wobei in der ersten Behandlungszone ein Absetzbecken (10) mit einer Vorrichtung zur Walzenbildung des Abwassers vorgesehen ist, dass die zweite Zone des Klärbeckens (12) als Schrägklärer (26) mit Plattenpaket (25) ausgebildet ist und dass das Absetzbecken (10) und/oder der Schrägklärer (26) am Beckenboden (30, 30') eine Schlammabsaugvorrichtung aufweist.

12. Anlage nach Anspruch 11, dadurch gekennzeichnet, dass das Abwasser über eine Abwasserzuleitung (11) im Absetzbecken (10) gegen eine Prallplatte (13) geleitet wird.

13. Anlage nach Anspruch 11 oder 12, dadurch gekennzeichnet, dass im Absetzbecken seitlich Tauchwände (15', 16') sowie Überlaufwände (15, 16) und weiter Leitungsrinnen (17, 18) zur Weiterleitung des vorgeklärten Abwassers vorgesehen sind.

14. Anlage nach Anspruch 11 oder 12, dadurch gekennzeichnet, dass der Schrägklärer (26) seitlich Rinnen (21, 22) und Tauchwände (23) zur gleichmässigen Verteilung des Abwassers längs des Plattenpakets (25), sowie eine mittig angeordnete Ablaufrinne (31) zur Abfuhr des geklärten Abwassers aufweist.

## Revendications

1. Procédé de nettoyage d'eaux industrielles, neutralisées, caractérisé en ce que dans une première étape de traitement, on envoie l'eau dans un bassin de décantation (10) se trouvant dans un bassin de décantation longitudinal (12) de façon à former un rouleau et d'arriver ainsi à une activation de la formation des flocons de boue, en ce que l'eau ainsi prénettoyée est fournie dans une seconde étape de traitement à une installation de nettoyage, inclinée (26) se trouvant également dans le bassin de décantation longitudinal (12), avec un paquet de plaques (25) réparties de préférence de façon régulière, et en ce qu'on évacue la boue qui se dépose au fond du bassin de décantation longitudinal (12).

2. Procédé selon la revendication 1, caractérisé en ce que les eaux usées envoyées dans le bassin de décantation (10) sont dirigées contre une plaque brise-jet (13), inclinée, par une conduite d'alimentation (11).

3. Procédé selon la revendication 1 ou 2, caractérisé en ce que la boue qui tombe au fond (30') du bassin de décantation (10) est éliminée par un dispositif d'aspiration (14).

4. Procédé selon la revendication 1 ou 2, caractérisé en ce que l'eau usée, prénettoyée, passe sous des barrages (15', 16') et par-dessus des cloisons latérales (15, 16) dans des rigoles latérales (17, 18) pour être envoyée à l'installation inclinée (26) en aval.

5. Procédé selon l'une ou plusieurs des revendications précédentes, caractérisé en ce que les eaux usées prénettoyées du bassin de décantation (10) sont divisées en des veines partielles (19, 20) pour être envoyées de façon régulière à l'installation inclinée (26).

6. Procédé selon l'une ou plusieurs des revendications précédentes, caractérisé en ce que les eaux usées prénettoyées sont fournies par des rigoles (21, 22) et des barrages (23, 24) prévus latéralement à l'installation inclinée (26) vers un paquet de plaques (25) de l'installation inclinée (26) en arrivant par le bas, en ce que les eaux usées remontent sur le paquet de plaques (25) et sont évacuées par une auge (31) prévue au milieu et au-dessus des plaques (25).

7. Procédé selon l'une ou plusieurs des revendications 4 à 6, caractérisé en ce que la boue qui se dépose sur le fond (30) du bassin de l'installation inclinée (26) est évacuée par aspiration à l'aide de tuyaux d'aspiration (27) prévus transversalement à l'axe longitudinal du bassin.

8. Procédé selon la revendication 7, caractérisé en ce que les tuyaux d'aspiration (27) effectuent un mouvement pendulaire alternatif au niveau du fond du bassin (30) par l'intermédiaire d'un moyen d'entraînement (28) et d'une tringlerie (29).

9. Procédé selon la revendication 7 ou 8, caractérisé en ce qu'un dispositif d'aspiration distinct est associé à chaque zone de décantation (32, 33).

10. Procédé selon la revendication 4, caractérisé en ce qu'une autre installation inclinée avec un paquet de plaques à intervalles de plaques réduits est prévue en aval de l'installation inclinée (10).

11. Installation pour la mise en œuvre du procédé selon l'une ou plusieurs des revendications 1 à 10, caractérisé en ce que le bassin de nettoyage (bassin de décantation longitudinal) (12) est subdivisé en au moins deux zones de traitement (10, 26), un bassin de décantation (10) avec un dispositif pour former un rouleau d'eau avec les eaux usées étant prévus dans la première zone de traitement et en ce que la seconde zone du bassin de nettoyage (12) est en forme d'installation inclinée (26) avec un paquet de plaques (25) et en ce que le bassin de décantation (10) et/ou l'installation inclinée (26) comportent un dispositif d'aspiration de boue au niveau du fond du bassin (30, 30').

12. Installation selon la revendication 11, caractérisée en ce que les eaux usées sont envoyées contre une plaque brise-jet (13) par une conduite d'eaux usées (11) dans le bassin de décantation (10).

13. Installation selon l'une quelconque des revendications 11 ou 12, caractérisée en ce que latéralement dans le bassin de décantation, il y a des barrages (15', 16') ainsi que des cloisons de débordement (15, 16) et d'autres rigoles (17, 18) pour conduire les eaux usées prénettoyées.

14. Installation selon la revendication 11 ou 12, caractérisée en ce que l'installation inclinée (26) comporte latéralement des rigoles (21, 22) et des barrages (23) pour répartir régulièrement les eaux usées le long du paquet de plaques (25) ainsi qu'une auge d'évacuation (31) prévue au milieu pour évacuer les eaux usées, nettoyées.

## Claims

1. A process for the purification of neutralised industrial waste waters, characterised in that, in a first treatment stage, the waste water is conveyed to a settling tank (10) located in an elongate settling tank (12) in such a manner that it acquires a roll formation and thus an intensification of a sludge flock formation, that, in a second treatment stage, the thus pre-clarified waste water is conveyed to an inclined clarifier (26) comprising a group of plates (25) preferably uniformly distributed and that the sludge settled at the bottom of the elongate settling tank (12) is removed.

2. A process according to claim 1, characterised in that, the waste water conveyed to the settling tank (10) is introduced through a supply line (11) against an inclined baffle plate (13).

3. A process according to claim 1 or 2, characterised in that, the sludge accumulated on the bottom (30') of the settling tank (10) is removed by a suction device (14).

4. A process according to claim 1 or 2, characterised in that, the pre-clarified waste water flows under immersed walls (15', 16') and over side walls (15, 16) into laterally arranged troughs (17, 18) and is conveyed to the subsequent inclined clarifier (26).

5. A process according to one or more of the preceding claims, characterised in that, the pre-clarified waste water from the settling tank (10) is subdivided into partial flows (19, 20) and is conveyed in a uniform manner to the inclined clarifier (26).

6. A process according to one or more of the preceding claims, characterised in that, the pre-clarified waste water is conveyed through troughs (21, 22) arranged at the side of the inclined clarifier (26) and immersed walls (23, 24) to a group of plates (25) of the inclined clarifier (26) from below, that the waste water rises upwards at the group of plates (25) and is discharged through a trough (31) arranged centrally above the plates (25).

7. A process according to one or more of claims 4 to 6, characterised in that, the sludge settled on the bottom of the tank (30) of the inclined clarifier (26) is extracted by means of suction pipes (27) arranged transversely with respect to the longitudinal axis of the tank.

8. A process according to claim 7, characterised in that, the suction pipes (27) perform a to-and-fro swinging movement at the bottom (30) of the tank by means of a drive (28) and a linkage (29).

9. A process according to claim 7 or 8, characterised in that, a separate suction device is associated with each settling zone (32, 33).

10. A process according to claim 4, characterised in that, a further inclined clarifier comprising a group of plates with a reduced plate spacing is arranged beyond the inclined clarifier (10).

11. Apparatus for carrying out the process according to one more of claims 1 to 10, characterised in that, the clarifying tank (elongate settling tank) (12) is subdivided into at least two treatment zones (10, 26) wherein a settling tank (10) provided with a device for effecting a roll formation of the waste water is provided in the first treatment zone, that the second zone of the clarifying tank (12) is formed as an inclined clarifier (26) comprising a group of plates (25) and that the settling tank (10) and/or the inclined clarifier (26) has a device for removing sludge by suction at the bottom (30, 30') of the tank.

12. Apparatus according to claim 11, characterised in that, the waste water is introduced into the settling tank (10) through a waste water supply line (11) against a baffle plate (13).

13. Apparatus according to claim 11 or 12, characterised in that, lateral immersed walls (15', 16') as well as overflow walls (15, 16) and further conveying troughs (17, 18) for advancing the pre-clarified waste water, are provided in the settling tank.

14. Apparatus according to claim 11 or 12, characterised in that, the inclined clarifier (26) has lateral troughs (21, 22) and immersed walls (23) for the uniform distribution of the waste water along the group of plates (25), as well as a centrally arranged discharge trough (31) for the discharge of the clarified waste water.

# FIG. 1

# FIG. 2